(19) Europäisches Patentamt
European Patent Office
Office européen des brevets

(11) EP 2 619 241 B1

(12) **FASCICULE DE BREVET EUROPEEN**

(45) Date de publication et mention de la délivrance du brevet:
**11.02.2015 Bulletin 2015/07**

(21) Numéro de dépôt: **11760765.5**

(22) Date de dépôt: **21.09.2011**

(51) Int Cl.:
***C08F 2/38*** *(2006.01)* ***C08F 8/30*** *(2006.01)*
***C08F 12/08*** *(2006.01)* ***C08J 5/22*** *(2006.01)*
***C08F 293/00*** *(2006.01)* ***H01M 8/10*** *(2006.01)*
***H01M 8/02*** *(2006.01)*

(86) Numéro de dépôt international:
**PCT/EP2011/066402**

(87) Numéro de publication internationale:
**WO 2012/038465 (29.03.2012 Gazette 2012/13)**

(54) **NOUVEAUX POLYMERES SULFONES UTILISABLES POUR CONSTITUER DES MEMBRANES DE PILE A COMBUSTIBLE**

NEUARTIGE SULFONPOLYMERE ZUR HERSTELLUNG VON BRENNSTOFFZELLMEMBRANEN

NOVEL SULFONE POLYMERS USEFUL FOR FORMING FUEL CELL MEMBRANES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2010 FR 1057668**

(43) Date de publication de la demande:
**31.07.2013 Bulletin 2013/31**

(73) Titulaires:
- **Commissariat à l'Énergie Atomique et aux Énergies Alternatives 75015 Paris (FR)**
- **Centre National de la Recherche Scientifique 75016 Paris (FR)**
- **Université Montpellier 2 Sciences et Techniques 34095 Montpellier Cedex 5 (FR)**
- **Ecole Nationale Supérieure de Chimie de Montpellier 34296 Montpellier Cedex 5 (FR)**

(72) Inventeurs:
- **BUVAT, Pierrick F-37250 Montbazon (FR)**
- **BIGARRE, Jannick F-37000 Tours (FR)**
- **PERRIN, Renaud F-37000 Tours (FR)**
- **AMEDURI, Bruno F-34000 Montpellier (FR)**
- **SOULES, Aurélien F-34310 Capestang (FR)**
- **BOUTEVIN, Bernard F-34090 Montpellier (FR)**

(74) Mandataire: **Ilgart, Jean-Christophe BREVALEX 95, rue d'Amsterdam 75378 Paris Cedex 8 (FR)**

(56) Documents cités:
**EP-A1- 1 126 537 US-A- 4 158 678**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention a trait à des polymères sulfonés originaux comprenant, entre autres, des blocs styréniques entre lesquels s'intercale un motif perfluorocarboné et leur procédé de préparation.

Ces copolymères, présentant d'excellentes capacités physico-chimiques, en particulier, une capacité d'échange ionique et une thermostabilité élevées, trouvent, en particulier, leur application dans la préparation de membranes échangeuses d'ions, destinées aux piles à combustible, en particulier les piles à combustible ayant une membrane comme électrolyte telles que les piles PEMFC (PEMFC signifiant « Proton Exchange Membrane Fuel Cell » pour « Pile à combustible à membrane échangeuse de protons ») et DMFC (DMFC signifiant « Direct Methanol Fuel Cell » pour « Pile à combustible directe au méthanol »).

### ÉTAT DE LA TECHNIQUE ANTÉRIEURE

Une pile à combustible comporte, classiquement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène (PEMFC) ou le méthanol pour des piles fonctionnant avec des mélanges méthanol/oxygène (DMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :

- une oxydation du combustible, se déroulant à l'interface anode/électrolyte produisant, dans le cas des piles à hydrogène des protons $H^+$, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu au niveau d'un assemblage électrode-membrane-électrode.

L'assemblage électrode-membrane-électrode est un assemblage très mince d'une épaisseur de l'ordre du millimètre et chaque électrode est alimentée par les gaz combustible et comburant par exemple à l'aide d'une plaque cannelée, dite plaque bipolaire.

La membrane conductrice ionique est généralement une membrane organique comprenant des groupes ioniques qui, en présence d'eau, permettent la conduction des protons produits à l'anode par oxydation de l'hydrogène.

Les membranes commerciales les plus utilisées à l'heure actuelle sont les membranes commercialisées sous les marques Nafion ®, Flemion ®, 3M®, Fumion ® et Hyflon Ion ® produites à l'échelle industrielle.

Les auteurs de la présente invention proposent de nouveaux polymères susceptibles d'être utilisés comme membrane de pile à combustible présentant, à la fois, une capacité d'échange ionique et une thermostabilité élevées, ces polymères étant structurellement différents de ceux existant dans l'art antérieur.

### EXPOSÉ DE L'INVENTION

Ainsi, l'invention a trait, selon un premier objet, à un polymère comprenant au moins une chaîne polymérique d'un premier type, ladite chaîne comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$, R pouvant être un atome d'hydrogène, un groupe alkyle ou un contre-ion cationique, lesdits deux blocs étant séparés par un groupe espaceur, lequel groupe espaceur est un groupe perfluorocarboné.

Un tel polymère présente les avantages suivants :

- une capacité d'échange ionique importante pouvant s'expliquer par l'accessibilité des groupes- $SO_3R$ disposés sur les groupes pendants phényles à la chaîne ;
- une inertie chimique et physique importante du fait de la présence de groupes espaceurs perfluorocarbonés

Avant d'entrer plus en détail dans cette description, nous précisons les définitions suivantes.

Par bloc, on entend, classiquement, au sens de l'invention, une partie du polymère constituée d'un enchaînement d'unités répétitives issues de la polymérisation de monomères styréniques tels que définis ci-dessus.

Par groupe alkyle, on entend classiquement, dans ce qui précède et ce qui suit, un groupe alkyle linéaire ou ramifié pouvant comprendre de 1 à 20 atomes de carbone ou cyclique pouvant comprendre de 3 à 20 atomes de carbone. On peut citer, à titre d'exemples, le groupe méthyle, éthyle, n-propyle, i-propyle, n-butyle, n-dodécanyle, i-butyle, t-butyle, cyclopropyle, cyclohexyle.

Par contre-ion cationique, on entend, classiquement, un cation apte à neutraliser la charge négative portée par le groupe $-SO_3^-$, ce contre-ion cationique pouvant être choisi parmi les cations issus d'éléments alcalins, les cations ammoniums.

Par groupe perfluorocarboné, on entend, classiquement, dans ce qui précède et ce qui suit, un groupe comprenant à la fois des atomes de carbone et des atomes de fluor (ce groupe perfluorocarboné étant par rapport à un groupe hydrocarboné, un groupe dont tous les atomes d'hydrogène sont remplacés par des atomes de fluor), ce groupe perfluorocarboné, dans le cadre de l'invention, formant pont entre deux blocs issus de la polymérisation de monomères styréniques. Par exemple, il peut s'agir d'un groupe perfluoroalkylène comprenant, par exemple, de 1 à 30 atomes de carbone, tel qu'un groupe $-C_6F_{12}-$.

Conformément à l'invention, les polymères comportent au moins deux blocs, chacun desdits blocs comprenant des unités répétitives issues de la polymérisation de monomères styréniques, lesdites unités comprenant au moins un groupe pendant phényle porteur d'au moins un groupe $-SO_3R$, R étant tel que défini ci-dessus.

Ces unités répétitives peuvent répondre à la formule générale (I) suivante :

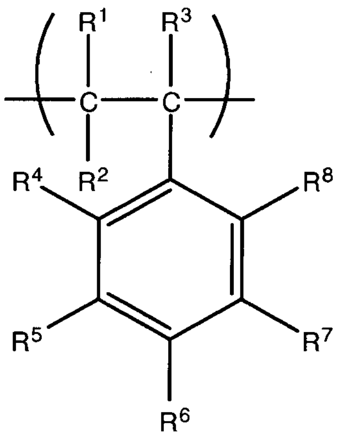

(I)

dans laquelle les $R^1$, $R^2$, $R^3$ représentent, indépendamment l'un de l'autre, un atome d'hydrogène, un groupe alkyle, un atome d'halogène et les $R^4$, $R^5$, $R^6$, $R^7$ et $R^8$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène, un groupe $-SO_3R$, R étant tel que défini ci-dessus, lesdits groupes alkyles, aryles, alkylaryles, -O-aryle, -O-alkyles étant éventuellement perfluorés et l'un au moins des groupes $R^4$, $R^5$, $R^6$, $R^7$ ou $R^8$ étant un groupe $-SO_3R$, avec R étant tel que défini ci-dessus.

Par groupe aryle, on entend, généralement, dans ce qui précède et ce qui suit, un groupe aryle pouvant comprendre de 6 à 20 atomes de carbone. On peut citer, à titre d'exemples, le groupe benzyle, naphtyle, biphényle.

Par groupe alkylaryle, on entend, généralement, dans ce qui précède et ce qui suit, un groupe aryle de même définition que celle donnée ci-dessus, ledit groupe étant substitué par au moins un groupe alkyle de définition identique à celle donnée ci-dessus.

Par groupe -O-alkyle, -O-aryle, on entend, classiquement, un groupe alkyle ou un groupe aryle, répondant à la même définition que celle donnée ci-dessus, le groupe alkyle ou aryle étant, dans ce cas, relié au groupe phényle de l'unité répétitive de formule (I) par l'intermédiaire d'un atome d'oxygène.

Par perfluoré, on entend, classiquement, un groupe dont tous les atomes d'hydrogène sont substitués par des atomes de fluor.

Par groupe acyle, on entend, classiquement, un groupe -CO-alkyle, le groupe alkyle répondant à la même définition que celle donnée ci-dessus, ce groupe alkyle étant lié au groupe phényle de l'unité répétitive de formule (I) par l'intermédiaire d'un groupe -CO-.

Selon un mode particulier de réalisation de l'invention, $R^1$ à $R^3$ représentent un atome d'hydrogène et l'un des $R^4$, $R^5$, $R^6$, $R^7$ ou $R^8$ représente un groupe $-SO_3R$, avec R étant tel que défini ci-dessus tandis que les autres groupes représentent un atome d'hydrogène, une unité répétitive répondant à cette définition pouvant répondre à la formule (Ia) suivante :

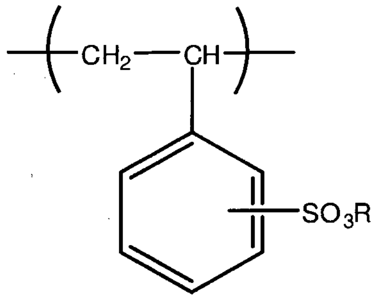

(Ia)

ce qui signifie que le groupe $-SO_3R$ substitue l'un des atomes d'hydrogène du groupe phényle.

Conformément à l'invention, lesdits au moins deux blocs sont séparés par un groupe espaceur (à savoir, un groupe organique formant pont entre les deux blocs), lequel groupe espaceur étant un groupe perfluorocarboné, ce groupe perfluorocarboné pouvant être un groupe perfluoroalkylène répondant à la formule (II) suivante :

$$-(CF_2)_n- \quad (II)$$

n correspondant au nombre de répétition du motif pris entre parenthèses, ce nombre pouvant être un entier pouvant aller de 1 à 30 atomes de carbone. En particulier, n peut être égal à 6.

Ainsi, selon un mode de réalisation particulier de l'invention, les polymères de l'invention peuvent comprendre une chaîne du premier type comprenant deux blocs comprenant des unités répétitives de formule (I) susmentionnée, lesdits blocs étant séparés par un groupe espaceur perfluorocarboné répondant à la formule (II) susmentionnée, l'ensemble formé de ces deux blocs et du groupe espaceur perfluorcarboné pouvant répondre à la formule (III) suivante :

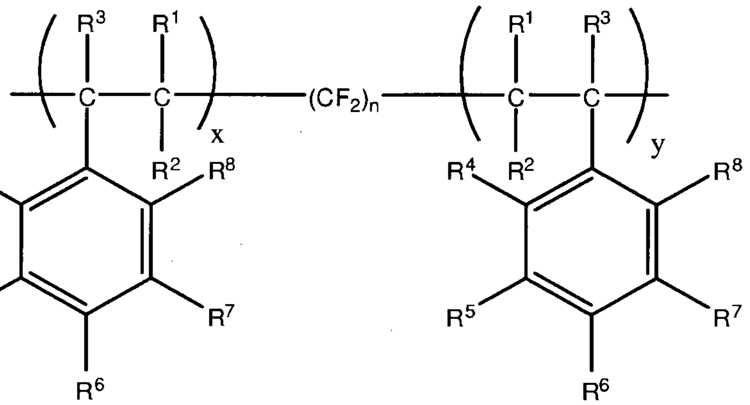

(III)

dans laquelle x et y correspondent au nombre de répétition du motif pris entre parenthèses, tandis que les $R^1$ à $R^8$ et n sont tels que définis ci-dessus.

Les polymères de l'invention peuvent être des polymères linéaires comprenant une chaîne polymérique du premier type susmentionné.

En particulier, les polymères de l'invention peuvent être des polymères linéaires comprenant deux blocs comprenant des unités répétitives issues de la polymérisation de monomères styréniques, lesdites unités comprenant au moins un groupe pendant phényle porteur d'au moins un groupe $-SO_3R$, R étant tel que défini ci-dessus, lesdits blocs étant séparés par un groupe espaceur perfluorocarboné, lesdits polymères comprenant, à leurs extrémités, des groupes terminaux (à savoir des groupes situés aux extrémités du polymère, lesquelles extrémités sont les extrémités des blocs susmentionnés non liées au groupe espaceur perfluorcarboné) pouvant être un atome d'iode ou un groupe azido $-N_3$.

Lesdites unités répétitives peuvent être des unités de formule (I) susmentionnée, tandis que le groupe perfluorocarboné peut être un groupe de formule (II) susmentionnée.

Un exemple de polymère conforme à la définition donnée ci-dessus peut être un polymère répondant à la formule (IV), dont les extrémités sont occupées par un atome d'iode ou un groupe azido, ce polymère pouvant être

représenté par la formule (IV) suivante :

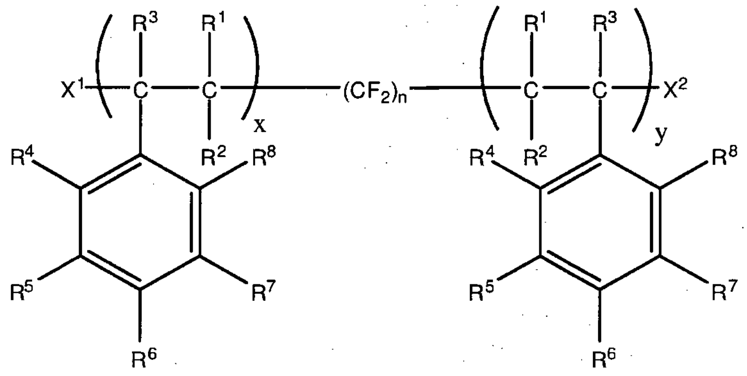

(IV)

dans laquelle $X^1$ et $X^2$ représentent, indépendamment l'un de l'autre, un atome d'iode ou un groupe azido $N_3$, les $R^1$ à $R^8$, x, y et n étant tels que définis ci-dessus.

Un polymère linéaire spécifique peut être un polymère constitué de deux blocs comprenant des unités répétitives de formule (I) susmentionnée, dans laquelle $R^1$ à $R^3$ sont des atomes d'hydrogène et l'un des $R^4$ à $R^8$ est un groupe $-SO_3R$ (avec R étant tel que défini ci-dessus) tandis que les autres groupes sont des atomes d'hydrogène, lesdits deux blocs étant séparés par un groupe espaceur de formule (II) susmentionnée, dans laquelle n est égal à 6, lequel polymère comprend des groupes terminaux du type iodo ou azido. Plus spécifiquement, ce polymère peut répondre à la formule (IV) susmentionnée, dans laquelle les $R^1$ à $R^3$ sont des atomes d'hydrogène, l'un des $R^4$ à $R^8$ est un groupe $-SO_3R$ (avec R étant tel que défini ci-dessus et, en particulier, est un atome d'hydrogène) tandis que les autres groupes sont des atomes d'hydrogène et n est égal à 6.

Les polymères de l'invention, lorsqu'ils sont linéaires, peuvent présenter une masse molaire allant de 15000 à 60000 g/mol ainsi qu'un indice de polymolécularité allant de 1,4 à 1,8.

Selon l'invention, les polymères de l'invention peuvent être également des polymères réticulés, ce qui signifie, en d'autres termes, qu'ils peuvent comprendre une ou plusieurs chaînes polymériques du premier type susmentionné ainsi qu'une ou plusieurs chaînes polymériques d'un deuxième type différent du premier type susmentionné, lesdites chaînes étant liées entre elles par des motifs de réticulation, qui peuvent être des motifs azido de formule $N_3$.

Selon un mode particulier de réalisation, les polymères de l'invention, lorsqu'ils sont réticulés, peuvent comprendre, outre une ou plusieurs chaînes polymériques du premier type susmentionné, une ou plusieurs chaînes polymériques d'un deuxième type différent du premier type susmentionné, lesdites chaînes du deuxième type pouvant comprendre, en particulier, au moins deux blocs, identiques ou différents, comprenant des unités répétitives issues de la polymérisation de monomères aliphatiques éthyléniques, lesdits blocs étant séparés par un groupe espaceur perfluorocarboné, lesdites chaînes étant liées entre elles par des motifs de réticulation, par exemple, du type azido.

Les unités répétitives issues de la polymérisation de monomères aliphatiques éthyléniques peuvent répondre à la formule (VI) suivante :

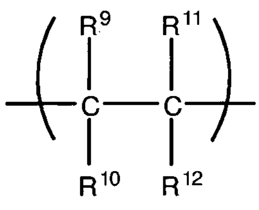

(VI)

dans laquelle les $R^9$, $R^{10}$, $R^{11}$ et $R^{12}$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène, tandis que le groupe espaceur perfluorocarboné peut répondre à la formule (VII) suivante :

$$-(CF_2)_m- \qquad (VII)$$

dans laquelle m correspond au nombre de répétition du motif pris entre parenthèses, m étant un entier pouvant aller de

1 à 30.

En particulier, les groupes $R^9$ à $R^{12}$ peuvent représenter un atome d'hydrogène.

En particulier, m peut être égal à 6

Selon un mode de réalisation particulier, les polymères de l'invention, lorsqu'ils sont des polymères réticulés, peuvent comprendre une chaîne du deuxième type comprenant deux blocs comprenant des unités répétitives répondant à la formule (VI) susmentionnée, lesdits blocs étant séparés par un groupe espaceur perfluorocarboné de formule (VII) susmentionnée, l'ensemble formé de ces deux blocs et du groupe espaceur pouvant répondre à la formule (VIII) suivante :

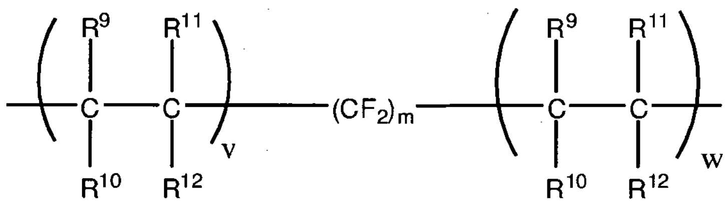

(VIII)

dans laquelle les $R^9$ à $R^{12}$ sont tels que définis ci-dessus, m, v et w correspondent au nombre de répétition du motif pris entre parenthèses.

En particulier, $R^9$ à $R^{12}$ peuvent correspondre à un atome d'hydrogène, v et w peuvent être égaux à 1, tandis que m peut être égal à 6.

Les motifs de réticulation peuvent être des motifs de réticulation du type azido, ce qui signifie que les différentes chaînes sont liées par leurs extrémités par le biais d'un motif azido.

Ainsi, lorsqu'un polymère de l'invention comprend des chaînes du premier type répondant à la formule (III) susmentionnée et des chaînes du deuxième type répondant à la formule (VIII) susmentionnée, ces chaînes peuvent être ainsi liées ensemble par des motifs azido pour former un réseau de formule (IX) suivante :

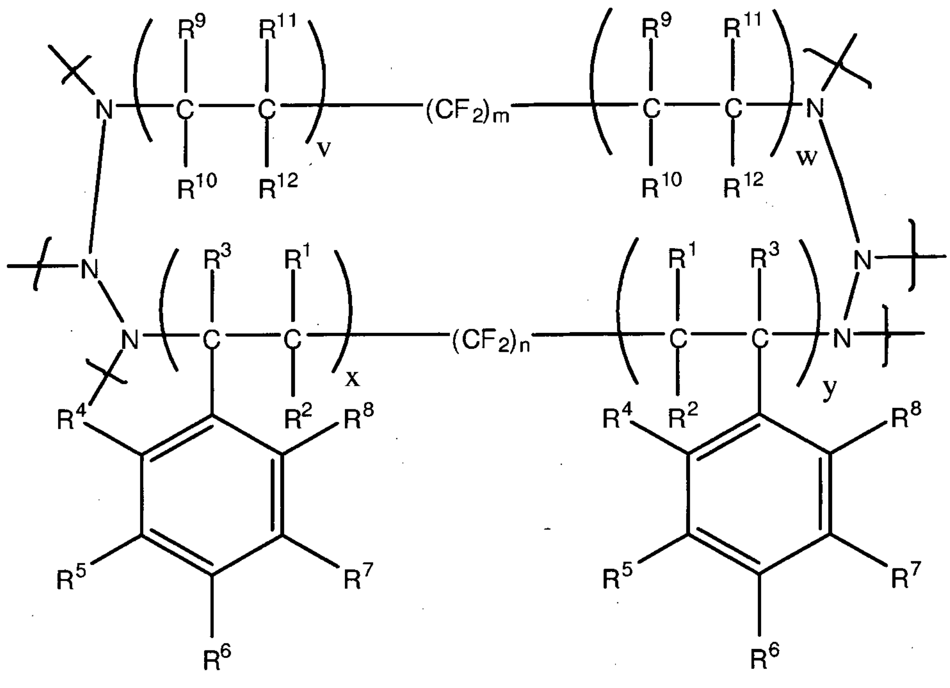

(IX)

dans laquelle les $R^1$ à $R^{12}$, x, y, v, w, n et m sont tels que définis ci-dessus,
les accolades interrompant les liaisons partant des atomes d'azote indiquant les endroits par lesquels ces atomes d'azote sont liés à une extrémité d'une autre chaîne du premier type ou d'une autre chaîne du deuxième type.

En particulier, les $R^1$ à $R^3$ peuvent être un atome d'hydrogène, l'un des $R^4$ à $R^8$, dans chacun des unités prises entre parenthèses, peut représenter un groupe $SO_3R$ (avec R étant tel que défini ci-dessus), les autres groupes étant un atome d'hydrogène, les $R^9$ à $R^{12}$ peuvent être des atomes d'hydrogène, n et m sont égaux à 6 et v et w sont égaux à 1.

Des polymères particuliers réticulés conformes à l'invention peuvent être des polymères comprenant une ou plusieurs chaînes du premier type susmentionné comprenant au moins deux blocs constitués d'unités répétitives répondant à la formule (I) susmentionnée, dans laquelle $R^1$ à $R^3$ sont des atomes d'hydrogène et l'un des groupes $R^4$ à $R^8$ est un groupe $-SO_3H$ tandis que les autres groupes sont des atomes d'hydrogène, lesdits blocs étant séparés par un groupe espaceur perfluorocarboné de formule (II) susmentionnée avec n étant égal à 6, et comprenant une ou plusieurs chaînes du deuxième type susmentionné comprenant au moins deux blocs constitués d'unités répétitives de formule (VI) susmentionnée, dans laquelle $R^9$ à $R^{12}$ représentent des atomes d'hydrogène, lesdits blocs étant séparés par un groupe espaceur de formule (VII) susmentionnée avec m étant égal à 6, lesdites chaînes étant liées entre elles par des motifs de réticulation, par exemple du type azido (ce qui signifie que des motifs de réticulation vont lier de façon covalente les extrémités des chaînes l'une à l'autre (que ce soient des chaînes du premier type ou du deuxième type).

Les polymères de l'invention peuvent être préparés par différents procédés impliquant une ou plusieurs étapes de polymérisation.

En particulier, les polymères de l'invention comprenant au moins une chaîne polymérique d'un premier type comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$, R pouvant être un atome d'hydrogène, un groupe alkyle ou un contre-ion cationique, lesdits deux blocs étant séparés par un groupe espaceur, lequel groupe espaceur étant un groupe perfluorocarboné, peuvent être préparés par un procédé comprenant les étapes suivantes :

a) une étape de polymérisation d'au moins un monomère styrénique par transfert dégénératif d'iode comprenant la mise en contact d'un agent de transfert comprenant un groupe perfluorocarboné tel que mentionné ci-dessus comprenant à ses deux extrémités un atome d'iode, d'un amorceur de polymérisation et d'au moins un monomère styrénique, moyennant quoi l'on obtient un polymère comprenant deux blocs comprenant des unités répétitives issues de la polymérisation du ou desdits monomères styréniques, lesdits blocs étant séparés par un groupe espaceur perfluorocarboné correspondant au groupe perfluorocarboné de l'agent de transfert, ledit polymère comprenant à ses extrémités un atome d'iode ;

b) une éventuelle étape de substitution des atomes d'iode situés aux extrémités du polymère obtenu à l'issue de l'étape a) par des groupes azido $-N_3$; et

c) une éventuelle étape de sulfonation du polymère obtenu à l'étape a) ou b) dans le cas où le monomère styrénique est dépourvu de groupe $-SO_3R$, R étant tel que défini ci-dessus.

Sans être lié par la théorie, le procédé de l'invention peut être explicité par le schéma réactionnel suivant, en prenant pour exemple de monomère styrénique, le styrène :

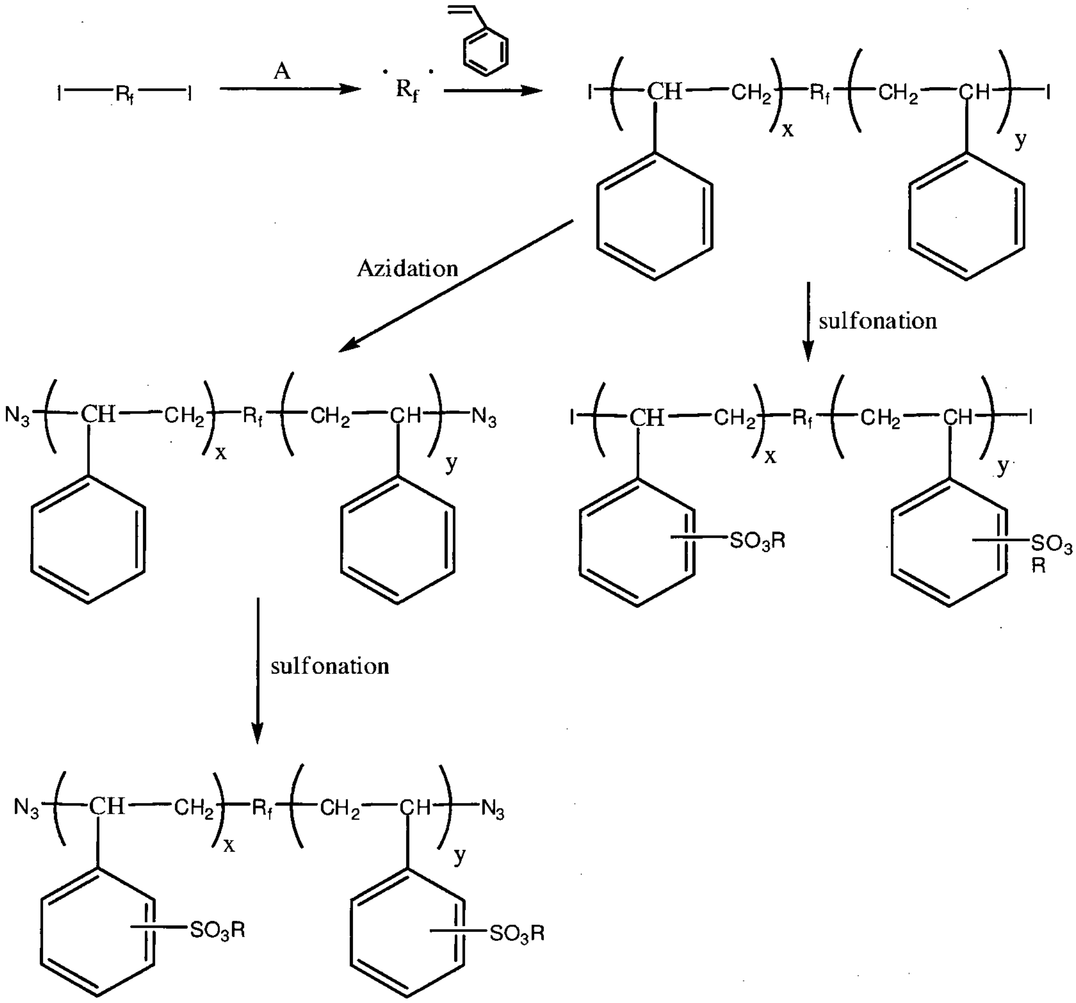


$R_f$ correspondant au groupe perfluorocarboné tel que mentionné ci-dessus, x et y correspondant au nombre de répétitition du motif pris entre parenthèses, R étant tel que défini ci-dessus, et A correspondant à l'amorceur de polymérisation.

Comme il ressort de ce schéma réactionnel, l'agent de transfert dégénératif d'iode $I\text{-}R_f\text{-}I$ forme un biradical $°R_f°$ qui va engendrer la polymérisation du styrène de part et d'autre du groupe $R_f$, moyennant quoi à l'issue de l'étape de polymérisation l'on obtient deux blocs polystyrènes séparés par un groupe perfluorocarboné $R_f$.

C'est ainsi que l'on peut préparer des polymères linéaires conformes à l'invention et tels que définis ci-dessus et ayant pour groupes terminaux des atomes d'iode ou des groupes azido $-N_3$, sous réserve, dans ce dernier cas, d'engager une réaction de substitution des atomes d'iode par des groupes azido.

Comme mentionné ci-dessus, l'agent de transfert comprend un groupe perfluorocarboné (lequel est destiné à se retrouver entre les deux blocs des polymères de l'invention) tel que mentionné ci-dessus, comprenant à ses deux extrémités un atome d'iode, cet agent de transfert pouvant répondre à la formule suivante :

$$I\text{-}R_f\text{-}I$$

dans laquelle $R_f$ correspond au groupe perfluorocarboné susmentionné.

En particulier, $R_f$ peut correspondre à un groupe de formule $-(CF_2)_n-$, avec n étant tel que défini ci-dessus, n pouvant être égal à 6, auquel cas, l'agent de transfert correspondra au 1,6-diiodoperfluorohexane de formule $I\text{-}C_6F_{12}\text{-}I$.

L'amorceur de polymérisation peut être choisi parmi les composés nitriles, tels que l'AiBN (abréviation correspondant à l'azo-bis-isobutyronitrile) ou encore les composés peroxydes, tels que le peroxyde de benzoyle, le peroxyde de tertiobutyle, le peroxyde de tertioamyle.

Les monomères styréniques peuvent répondre à la formule (X) suivante :

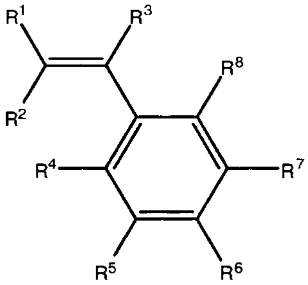

(X)

dans laquelle les $R^1$, $R^2$, $R^3$ représentent, indépendamment l'un de l'autre, un atome d'hydrogène, un groupe alkyle, un atome d'halogène et les $R^4$, $R^5$, $R^6$, $R^7$ et $R^8$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène, un groupe $-SO_3R$, R étant tel que défini ci-dessus, lesdits groupes alkyles, aryles, alkylaryles, -O-aryle, -O-alkyles étant éventuellement perfluorés.

Lorsque aucun des groupes $R^4$, $R^5$, $R^6$, $R^7$ et $R^8$ ne correspond à un groupe $-SO_3R$ tel que mentionné ci-dessus, le procédé de l'invention comporte une étape de sulfonation (étape c) mentionnée ci-dessus), cette étape de sulfonation consistant à introduire sur au moins un des atomes de carbone du groupe phényle un groupe $-SO_3R$. Concrètement, cette étape peut consister à soumettre le polymère obtenu à l'issue de l'étape de polymérisation à l'action de l'acide chlorosulfonique éventuellement en solution dans un solvant organique, tel qu'un solvant halogène (par exemple, le 1,2-dichloroéthane).

Lorsque l'on veut obtenir des polymères linéaires tels que définis ci-dessus comportant comme groupes terminaux des groupes du type azido, le procédé de l'invention peut comporter, après l'étape de polymérisation et avant l'éventuelle étape de sulfonation, une étape de substitution nucléophile des atomes d'iode par des groupes azido, cette étape de substitution nucléophile pouvant consister à soumettre le polymère obtenu après l'étape de polymérisation à l'action de l'azoture de sodium.

Lorsque les polymères de l'invention sont des polymères réticulés comprenant, outre une ou plusieurs chaînes du premier type susmentionné, une ou plusieurs chaînes d'un deuxième type différent du premier type susmentionné, lesdites chaînes du deuxième type pouvant comprendre au moins deux blocs, identiques ou différents, lesdits blocs comprenant des unités répétitives issues de la polymérisation de monomères aliphatiques éthyléniques, lesdits blocs étant séparés par un groupe espaceur perfluorocarboné, lesdites chaînes étant liées par des motifs de réticulation du type azido, le procédé de préparation de tels polymères peut comprendre les étapes suivantes :

d) une étape de préparation d'un polymère téléchélique précurseur desdites chaînes du deuxième type, ledit polymère téléchélique comprenant au moins deux blocs, identiques ou différents, lesdits blocs pouvant comprendre des unités répétitives issues de la polymérisation de monomères aliphatiques éthyléniques tels que mentionnés ci-dessus, ces blocs étant séparés par un groupe espaceur perfluorocarboné, les extrémités de ce polymère téléchélique consistant en un groupe azido ;

e) une étape de préparation d'un polymère comprenant au moins une chaîne polymérique d'un premier type comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$, R pouvant être un atome d'hydrogène, un groupe alkyle ou un contre-ion cationique, lesdits deux blocs étant séparés par un groupe espaceur, lequel groupe espaceur étant un groupe perfluorocarboné, ladite étape de préparation comprenant les opérations successives suivantes :

*une opération de polymérisation d'au moins un monomère styrénique par transfert dégénératif d'iode comprenant la mise en contact d'un agent de transfert comprenant un groupe perfluorocarboné tel que mentionné ci-dessus comprenant à ses deux extrémités un atome d'iode, d'un amorceur de polymérisation et d'au moins un monomère styrénique, moyennant quoi l'on obtient un polymère comprenant deux blocs comprenant des unités répétitives issues de la polymérisation du ou desdits monomères styréniques, lesdits blocs étant séparés par un groupe espaceur perfluorocarboné correspondant au groupe perfluorocarboné de l'agent de transfert, ledit polymère comprenant à ses extrémités un atome d'iode ;

*une opération de substitution des atomes d'iode situés aux extrémités du polymère obtenu à l'opération de polymérisation précédente par des groupes azido $-N_3$ ; et

f) une étape de réticulation du polymère obtenu à l'issue de l'étape e) telle que définie ci-dessus en présence du

polymère téléchélique obtenu à l'issue de l'étape d) telle que définie ci-dessus ;

g) une éventuelle étape de sulfonation du polymère obtenu à l'étape f) susmentionnée, dans le cas où le ou les monomères styréniques mentionnés à l'étape e) ne comportent pas de groupes $-SO_3R$, avec R étant tel que défini ci-dessus.

L'opération de polymérisation de l'étape e) et l'opération de substitution de l'étape e) sont similaires aux étapes a) et b) susmentionnées.

Lors de l'étape de réticulation du polymère obtenu à l'issue de l'étape e) en présence du polymère téléchélique susmentionné, les groupes azido portés par le polymère téléchélique vont réagir avec les groupes azido situés aux extrémités du polymère obtenu à l'issue de l'étape e), moyennant quoi il y a formation de ponts azido entre les chaînes du premier type et les chaînes du deuxième type.

Cette étape de réticulation peut être réalisée en soumettant le mélange de polymère issu de l'étape e) et de polymère téléchélique issu de l'étape d) (ce mélange pouvant être éventuellement mis sous forme d'un film) à une irradiation ultraviolette.

Le polymère téléchélique susmentionné peut comprendre deux blocs, identiques ou différents, comprenant des unités répétitives issues de la polymérisation de monomères aliphatiques éthyléniques, lesdites unités pouvant répondre à la formule (VI) suivante :

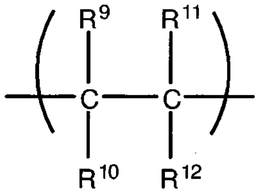

(VI)

dans laquelle les $R^9$, $R^{10}$, $R^{11}$ et $R^{12}$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène, tandis que le groupe espaceur perfluorocarboné séparant lesdits blocs peut répondre à la formule (VII) susmentionnée.

L'étape de préparation du polymère téléchélique peut comprendre les opérations suivantes :

- une opération de polymérisation d'au moins un monomère, dont la polymérisation est destinée à constituer les unités répétitives des blocs constitutifs des chaînes du deuxième type, ces monomères pouvant être des monomères aliphatiques éthyléniques, en présence d'un agent de transfert consistant en un composé diiode comprenant à ses deux extrémités des atomes d'iode séparés par un groupe espaceur perfluorocarboné tel que défini ci-dessus et d'un amorceur de polymérisation moyennant quoi l'on obtient un polymère comprenant deux blocs issus de la polymérisation du ou desdits monomères susmentionnés, ces blocs étant séparés par ledit groupe espaceur perfluorocarboné correspondant au groupe espaceur perfluorocarboné de l'agent de transfert susmentionné et ledit polymère comportant à ses extrémités deux atomes d'iode ;
- une opération de substitution des atomes d'iode des extrémités du polymère par des groupes azido $-N_3$.

Le monomère peut être un monomère aliphatique éthylénique répondant à la formule (XI) suivante :

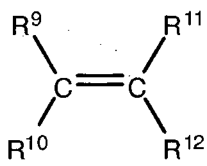

(XI)

dans laquelle les $R^9$, $R^{10}$, $R^{11}$ et $R^{12}$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène.

L'agent de transfert peut répondre à la formule suivante :

I-$R_f$-I

dans laquelle $R_f$ correspond au groupe perfluorocarboné susmentionné, ce groupe pouvant correspondre à la formule (VII) susmentionnée avec m pouvant être égal à 6, moyennant quoi il correspond au 1,6-diiodoperfluorohexane de formule I-$C_6F_{12}$-I.

Ainsi, lorsque le monomère aliphatique éthylénique répond à la formule spécifique susmentionnée et l'agent de transfert répond à la formule spécifique susmentionnée, l'étape de préparation du polymère téléchélique peut être résumée par le schéma réactionnel suivant :

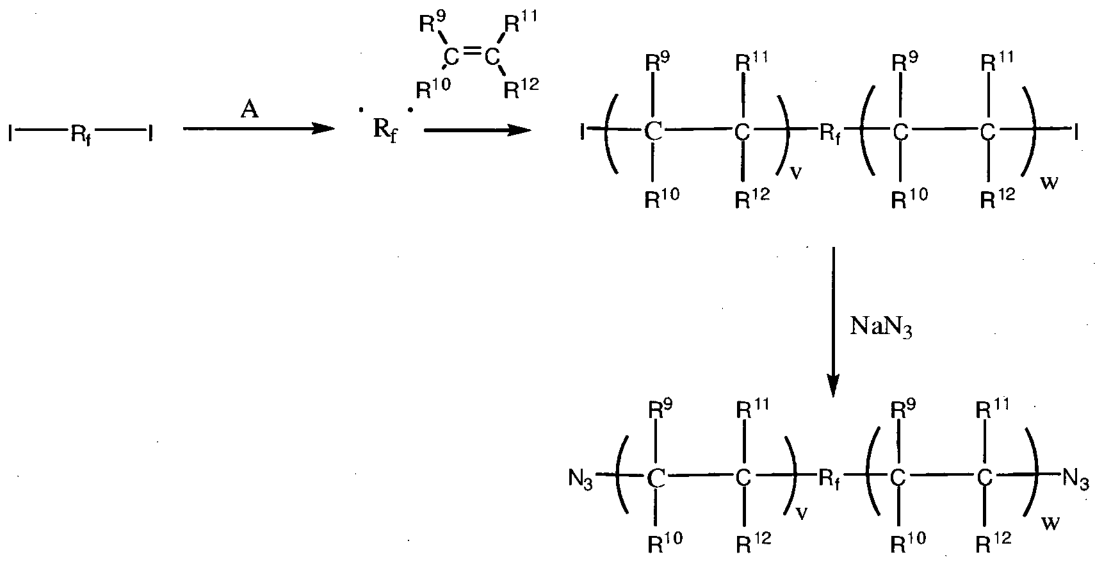


$R_f$ correspondant au groupe perfluorocarboné tel que mentionné ci-dessus, v et w correspondant au nombre de répétitition du motif pris entre parenthèses et A correspondant à l'amorceur de polymérisation.

L'étape de substitution nucléophile peut être réalisée d'une manière similaire à celle exposée ci-dessus.

L'étape de sulfonation peut être également réalisée d'une manière similaire à celle exposée ci-dessus.

Quel que soit le mode de réalisation, lorsque R représente un atome d'halogène ou un groupe alkyle, le procédé de l'invention peut comporter en outre, une étape d'hydrolyse acide permettant de transformer les groupes R en atome d'hydrogène.

Le procédé de l'invention peut comprendre, également, à son issue, une étape d'isolement du polymère du milieu réactionnel, cette étape d'isolement pouvant consister à ajouter au milieu réactionnel un solvant de précipitation, tel que du pentane froid suivi d'une filtration du précipité obtenu.

Les polymères selon l'invention, comme mentionnés précédemment, ont pour particularité de présenter une bonne stabilité chimique et mécanique ainsi qu'une bonne conductivité protonique

De ce fait, la présente invention a également pour objet une membrane comprenant au moins un polymère tel que décrit ci-dessus, cette membrane pouvant être, en particulier, une membrane conductrice de protons.

Les membranes peuvent être préparées de manière classique, par exemple, par coulée, c'est-à-dire que le polymère est mis en solution dans un solvant adéquat, tel que de l'acétone, puis appliqué sur une surface plane, par exemple une plaque de verre, à l'aide d'un dispositif, tel qu'un applicateur à main.

Le polymère formant un film humide est ensuite séché pour former un film d'épaisseur adéquate, par exemple de 15 à 150 $\mu$m, puis décollé du substrat.

De telles membranes, notamment lorsque R représente un atome d'hydrogène, présentent une capacité d'échange ionique très élevée, par exemple pouvant aller de 1 à 3,5 méq.$g^{-1}$. De ce fait, ces membranes peuvent être utilisées notamment pour isoler les compartiments anodiques et cathodiques d'une pile à combustible pouvant fonctionner avec les systèmes suivants :

- hydrogène, alcools, tel que méthanol à l'anode ;
- oxygène, air à la cathode.

De ce fait, la présente invention a également pour objet un dispositif de pile à combustible comprenant au moins une cellule comprenant une membrane telle que définie ci-dessus disposée entre deux électrodes.

Pour préparer un tel dispositif, la membrane est placée entre deux électrodes, par exemple, en tissu de carbone,

éventuellement platiné, et imprégnée par exemple par du copolymère, selon l'invention. L'ensemble est pressé par chauffage.

Cet ensemble est ensuite inséré entre deux plaques (par exemple, en graphite, appelées plaques bipolaires), qui assurent la distribution des gaz et la conductivité électrique).

L'invention va maintenant être décrite, en référence aux exemples suivants, donnés à titre indicatif et non limitatif.

## EXPOSÉ DÉTAILLÉ DE MODES DE RÉALISATION PARTICULIERS

Exemple 1

Cet exemple illustre la préparation d'un film en polymère sulfoné conforme à l'invention, ce film étant préparé selon le schéma réactionnel suivant :

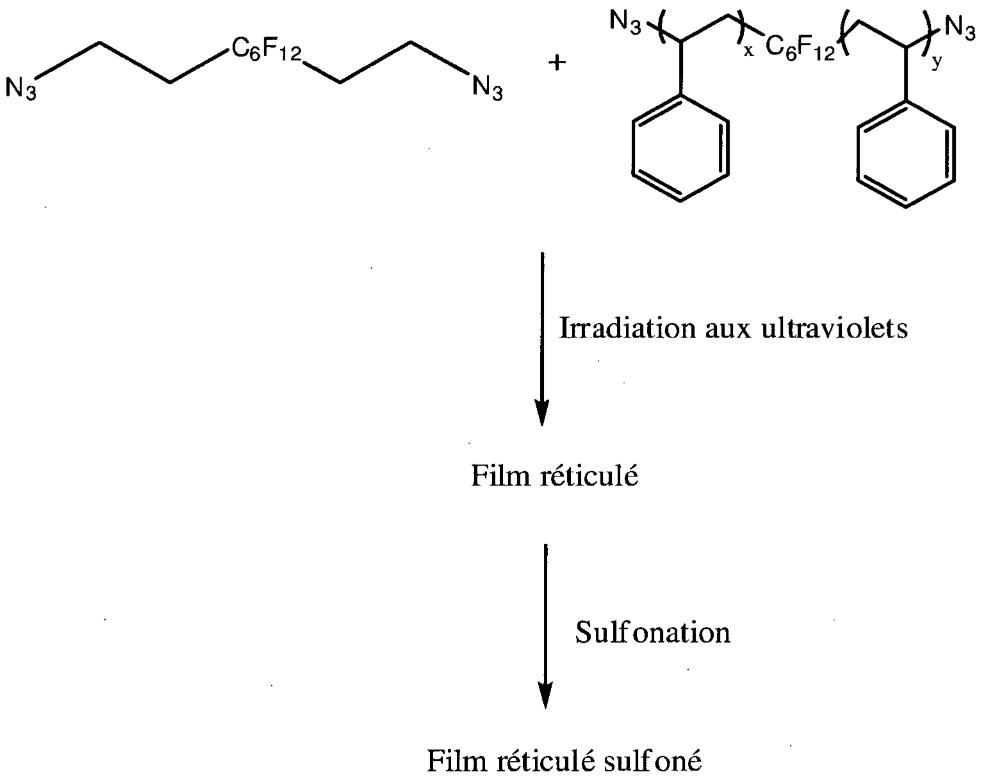


avec x et y correspondant au nombre de répétition du motif pris entre parenthèses.

Cet exemple comprend les étapes suivantes :

- une étape de préparation du 1,10-diazido-1H,1H,2H,2H,9H,9H,10H,10H-perfluorodécane (dite, ci-dessous étape b) impliquant la préparation préalable du 1,10-diiodo-1H,1H,2H,2H,9H,9H,10H,10H-perfluorodécane (dite, ci-dessous, étape a) ;
- une étape de polymérisation du styrène par transfert dégénératif d'iode (dite, ci-dessous, étape c) ;
- une étape d'azidation du polymère obtenu à l'étape c) (dite, ci-dessous, étape d).
- une étape de photoréticulation du polymère obtenu à l'étape d) avec le composé préparé à l'étape b (dite, ci-dessous, étape e) ;
- une étape de sulfonation du polymère ainsi photoréticulé (dite, ci-dessous, étape f) ;
- une étape de détermination de la teneur en eau et de la capacité d'échange ionique titrée (dite, ci-dessous, étape g).

Etape a- Préparation du 1,10-diiodo-1H,1H,2H,2H,9H,9H,10H,10H-perfluorodécane

Le 1,10-diiodo-1H,1H,2H,2H,9H,9H,10H,10H-perfluorodécane est préparé par bismonoaddition du $\alpha,\omega$-diiodoperfluorohexane sur l'éthylène dans un autoclave Hastelloy HC276 de 160 mL selon le schéma réactionnel suivant :

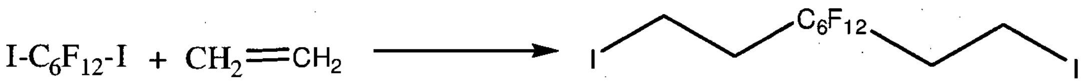

Le protocole opératoire précis est le suivant.

L'autoclave, avant introduction des réactifs, est préalablement fermé et testé à une pression de 30 bars pendant 20 minutes, pour détecter d'éventuelles fuites. L'autoclave est ensuite dégazé et placé sous un vide de 2 mm de mercure pendant 15 minutes. Ensuite, un amorceur de polymérisation (le di-4-*tert*-butylcyclohexylperoxydicarbonate) (4,22 g, 10 mmol) et 30,13 g (54,2 mmol) de $\alpha,\omega$-diiodoperfluorohexane solubilisés dans du *tert*-butanol (40 mL) sont introduits via une canule connectée à une valve d'introduction de l'autoclave.

Puis l'autoclave est placé dans une balance et l'éthylène (3,0g, 0,1 mol) est introduit. Celui-ci est chauffé à 50°C pendant 7 heures. Une augmentation de pression de 5 à 13 bars est observée suivie d'une lente diminution jusqu'à 5 bars. L'autoclave est ensuite refroidi à température ambiante puis placé dans un bac de glace.

Après élimination de l'éthylène non consommé, l'autoclave est ouvert et le *tert*-butanol est évaporé. Le produit obtenu est solubilisé dans 20 mL de tétrahydrofurane puis précipité dans du pentane froid. Le précipité est séparé par filtration sur un fritté de porosité 4, puis lavé et séché à température ambiante sous vide (à 20 mm de mercure pendant 24 heures) pour donner une poudre blanche (26 g) avec un rendement de 82%.

Le spectre RMN du $^{19}F$ présente trois singulets d'intégration 4 présentant les déplacements chimiques suivants : -115,2 ppm, -121,8 ppm et -123,8 ppm attribuables aux atomes de fluor situés en positions $\alpha$, $\beta$ et $\gamma$ du motif éthylène (ces déplacements chimiques correspondant, en d'autres termes, aux atomes de fluor portés par le groupe $-C_6F_{12}-$). Le singulet situé à -60 ppm caractéristique des atomes de fluor en $\alpha$ des atomes d'iode du précurseur $IC_6F_{12}I$ n'est pas observé, ce qui atteste que ce précurseur a réagi quantitativement selon le schéma réactionnel mentionné ci-dessus.

Le spectre RMN du $^1H$ montre un multiplet à 2,8 ppm ainsi qu'un triplet à 3,2 ppm respectivement attribués aux atomes d'hydrogène situés en positions $\alpha$ et $\beta$ des atomes d'iode.

<u>Etape b-Préparation du 1,10-diazido-1H,1H,2H,2H,9H,9H,10H,10H-perfluorodécane</u>

Le 1,10-diazido-1H,1H,2H,2H,9H,9H,10H,10H-perfluorodécane est préparé selon le schéma réactionnel suivant :

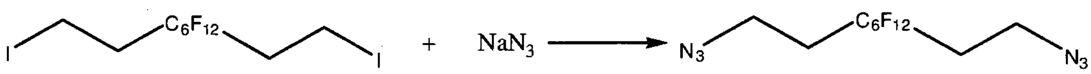

Le protocole opératoire précis est le suivant.

Dans un ballon monocol de 100 mL sont introduits 7,80 g (12,8 mmol) de 1,10-diiodo-1H,1H,2H,2H,9H,9H,10H,10H-perfluorodécane préparé selon l'étape a) et 2,21 g (30,8 mmol) d'azoture de sodium et 35 mL de diméthylsulfoxyde (DMSO). Le ballon est placé sur un agitateur magnétique et chauffé à 50°C pendant 48 heures. Le mélange brut réactionnel est précipité dans 250 mL d'eau puis repris au diéthyléther.

La phase organique est lavée avec de l'eau (50 mL) trois fois et séchée sur du sulfate de magnésium. Le solvant est évaporé sous pression réduite pour donner 3,4 g d'une huile de couleur vert pâle avec un rendement de 70%.

Le spectre RMN du $^{19}F$ montre des pics aux déplacements chimiques respectifs suivants : -114,2 ppm, -121,8 ppm et -123,8 ppm correspondant aux atomes de fluor situés en positions $\alpha$, $\beta$ et $\gamma$ des groupes éthylènes situés de part et d'autre du groupe $-C_6F_{12}-$.

Le spectre RMN du $^1H$ présente un multiplet d'intégration 4 centré à 2,3 ppm du fait du blindage ainsi qu'un triplet d'intégration 4 centré à 3,6 ppm par déblindage attribuables respectivement aux protons des groupements $-CH_2-$ situés en $\alpha$ et $\beta$ du groupe $-CF_2-$ situé en extrémité du groupe $-C_6F_{12}-$.

L'analyse en spectroscopie infrarouge met en évidence la présence des fonctions azides par la présence d'une bande de forte intensité située à 2100 $cm^{-1}$. La bande caractéristique des groupes -CF- apparaît dans un domaine de longueurs d'onde allant de 1000 à 1250 $cm^{-1}$.

<u>Etape c-Polymérisation radicalaire du styrène par transfert dégénératif d'iode</u>

La présente étape illustre la polymérisation du styrène par transfert dégénératif d'iode impliquant l'utilisation du 1,6-diiodoperfluorohexane ($IC_6F_{12}I$) selon le schéma réactionnel suivant :

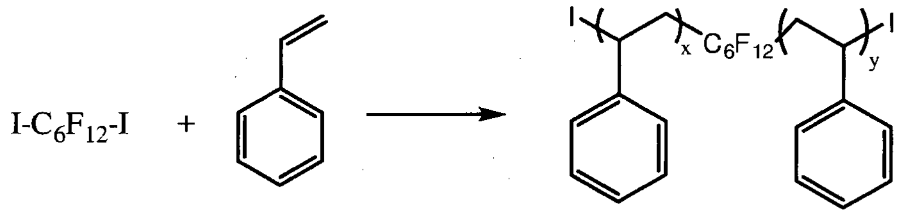

x et y correspondant au nombre de répétition des unités répétitives prises entre parenthèses.

Le protocole opératoire précis est le suivant.

Dans un tube de Schlenk sont introduits 0,0246 g (0,15 mmol) de α,α'-azobis (isobutyronitrile) (AiBN), 0,275 g (0,5 mmol) de 1,6-diiodoperfluorohexane ($IC_6F_{12}I$) et 25 g (48 mmol) de styrène. Le système est ensuite dégazé pendant 20 minutes par bullage d'azote, fermé et porté à 70°C durant 24 heures. Après réaction, le mélange brut réactionnel est refroidi à température ambiante puis solubilisé par 20 mL de tétrahydrofurane (THF). La solution obtenue est précipitée dans 500 mL d'éther diéthylique. Le précipité est obtenu par filtration sur fritté de porosité 4 puis séché sous vide pendant 24 heures, moyennant quoi l'on obtient une poudre blanche (6 g), le rendement étant de 27%.

Etape d-Etape d'azidation du polymère obtenu à l'étape c)

Cette étape peut être résumée par le schéma réactionnel suivant.

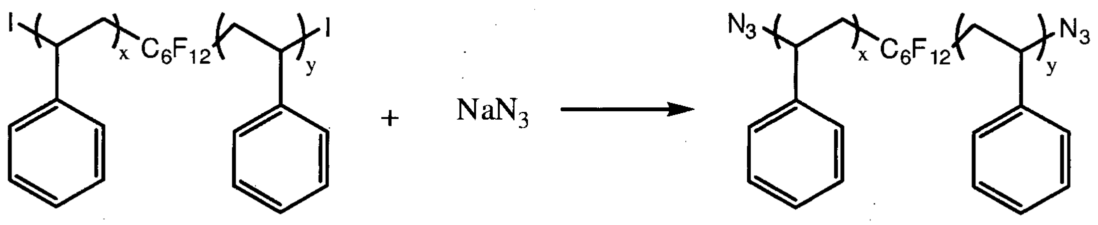

Le protocole opératoire précis est le suivant.

Dans un ballon de bicol de 250 mL contenant un barreau aimanté et surmonté d'un réfrigérant sont introduits respectivement 6,7 g (0,13 mmol) de polymère obtenu à l'étape c), 0,2 g (3 mmol) d'azoture de sodium ($NaN_3$) et 10 mL de diméthylformamide.

Le mélange réactionnel est agité pendant 12 heures à 50°C. La solution obtenue est précipitée dans 500 mL d'eau. Le précipité est extrait par filtration sur un fritté de porosité 4. Le produit obtenu est solubilisé dans 20 mL de tétrahydrofurane (THF) et séché sur du sulfate de magnésium. Le solvant est évaporé sous pression réduite. Le produit se présente sous la forme d'une poudre blanche (6,0 g), le rendement étant de 87%.

Etape e-Photoréticulation du polymère préparé selon l'exemple d en présence du composé préparé à l'exemple b

Dans un tube à hémolyse sont introduits 420,0 mg du polymère obtenu selon l'étape d, 343,64 mg de 1,10-diazido-1H,1H,2H,2H,9H,9H,10H,10H-perfluorodécane obtenu selon l'étape b et 2,0 mL de tétrahydrofurane (THF). La solution est laissée à l'abri de la lumière pendant 12 heures afin d'obtenir une solution limpide. Cette solution est ensuite déposée sur une plaque de verre de 2 $cm^2$ préalablement placée sur une tournette (modèle Karl Suss Technique SA Apparatus CT60). La mise en forme du film est réalisée à une vitesse de 3500 tours/min atteinte en 15 secondes. Le film d'une épaisseur de 20 à 30 μm est séché dans une étuve thermostatée à 60°C pendant 6 heures puis est porté à 80°C sur une période de 12 heures.

L'irradiation est effectuée au moyen d'un banc UV de modèle Fusion LC6 avec une vitesse de 2,5 m/min pendant 45 minutes, pour engendrer la photoréticulation.

Etape f-Sulfonation du polymère réticulé obtenu à l'étape e

L'étape de sulfonation est réalisée dans un système clos contenant 25 mL de 1,2-dichloroéthane et 1 mL d'acide chlorosulfonique. Le film réticulé préparé selon l'étape e) collé sur son substrat de verre est immergé dans cette solution. Un dégazage par bullage d'azote est réalisé durant 20 minutes. Après sulfonation, les membranes sont immergées dans des solutions d'éthanol pour éliminer les résidus d'acide chlorosulfonique.

Le degré de sulfonation (DOS) a été défini à partir de l'équation suivante :

$$DOS=[(CEI_{expérimental})/(CEI_{théoriqe})]*100$$

$CEI_{expérimental}$ correspondant à la capacité d'échange ionique obtenue à partir du pourcentage de soufre déterminé par analyse élémentaire ; et

$CEI_{théorique}$ correspondant à la capacité d'échange ionique théorique calculée à partir de la quantité de copolymère tribloc (à savoir polystyrène-b-$C_6F_{12}$-b-polystèrène) (de masse molaire en nombre Mn=50 000 g/mol) appartenant au réseau, en partant du principe que chaque cycle présente un groupement $-SO_3H$.

La $CEI_{théorique}$ est ainsi déterminée selon la formule suivante :

$$CEI_{théorique}= [x * \%\ massique\ de\ S\ dans\ le\ copolymère\ pour\ un\ taux\ de\ sulfonation\ de\ 100\%]/M_s$$

dans laquelle :

- x correspondant au pourcentage massique du copolymère tribloc par rapport à l'additif $N_3-(CH_2)_2-C_6F_{12}-(CH_2)_2-N_3$, à savoir 60% dans notre cas ;
- $M_s$ correspondant à la masse molaire du soufre (soit 32,06 g/mol) ;
- % massique de S dans le copolymère pour un taux de sulfonation de 100% étant de 17,4%,

ce qui nous amène à une $CEI_{théorique}$ de 3,2 méq/g.

La $CEI_{expérimentale}$ est, quant à elle, déterminée par la formule suivante :

$$CEI_{expérimentale}=\%S/M_S$$

- %S correspondant au pourcentage massique de soufre dans le copolymère déterminé par analyse élémentaire, qui a été dans notre cas estimé à 11% ;
- $M_s$ correspondant à la masse molaire du soufre,

ce qui nous amène à une $CEI_{expérimentale}$ de 3,4 méq/g (± 0,8 méq/g).

L'on peut ainsi, de par la similarité des valeurs constatées entre la $CEI_{théorique}$ et la $CEI_{expérimentale}$, déduire que le rendement de sulfonation est quantitatif.

<u>Etape g-Détermination de la teneur en eau et de la capacité d'échange ionique titrée</u>

Avant de déterminer la teneur en eau et de la capacité d'échange ionique titrée, la membrane sulfonée obtenue à l'issue de l'étape f) est amenée à subir deux cycles de stabilisation selon les modalités opératoires suivantes :

- immersion durant 2 heures dans une solution de 100 mL de HCl à 0,1 mol/L ;
- immersion durant 2 heures dans une solution de 100 mL de NaOH à 0,1 mol/L ; et
- rinçage par une solution de NaCl à 0,1 mol/L.

Les mesures de teneur en eau sont réalisées, après immersion dans 250 mL de solution de NaOH à 0,1 mol/L, de la membrane ainsi traitée.

Elles sont déterminées selon la formule suivante :

$$\text{Teneur en eau (symbolisée TE)} = 100*[(\text{masse humide} - \text{masse à sec})/\text{masse humide}]$$

la masse humide étant, dans notre cas, estimée à 8150 mg et la masse à sec (c'est-à-dire la masse après déshydratation) étant estimée à 814 mg, ce qui nous amène à une teneur en eau de 110%.

La mesure de la capacité d'échange ionique titrée est réalisée en suivant le protocole suivant :

- Immersion de la membrane sulfonée pendant 1 heure dans 250 mL d'une solution d'acide chlorhydrique 1N ; puis
- Immersion de la membrane sulfonée pendant 4 heures dans 20 mL d'une solution composée de 20 mL de solution de NaOH à 0,1 N et 230 mL de solution de NaCl à 0,1 mol/L, la solution résultante étant dénommée solution 1.

Une solution, dite solution 2, est préparée dans les mêmes conditions que la solution 1, si ce n'est que la solution 2 n'est pas destinée à imprégner la membrane. La solution 2 a valeur de solution témoin.

Les dosages sont effectués sur des prélèvements de 20 mL des solutions 1 et 2 par une solution d'acide chlorhydrique à 0,01 N. La capacité d'échange est définie par rapport aux volumes équivalents $V_1$ et $V_2$ selon l'équation suivante :

$$CEI = [(V_2 - V_1)*0,1]/m_S$$

ms correspondant à la masse molaire du groupement sulfoné),
ce qui nous amène à une valeur de CEI titrée de 3,6 méq/g.

On peut souligner la cohérence entre les valeurs des CEI définies à partir des analyses élémentaires et celles qui sont déterminées expérimentalement par dosage. Ce résultat met en évidence l'accessibilité notable des groupements protogènes au sein de la membrane.

En outre, la teneur en eau définie expérimentalement plafonnant à plus de 100%, ce qui amène à la conclusion que le taux de réticulation est suffisant pour contrôler la pression osmotique au sein de la membrane.

## Revendications

1. Polymère comprenant au moins une chaîne polymérique d'un premier type, ladite chaîne comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$ R pouvant être un atome d'hydrogène, un groupe alkyle ou un contre-ion cationique, lesdits deux blocs étant séparés par un groupe espaceur, lequel groupe espaceur est un groupe perfluorocarboné.

2. Polymère selon la revendication 1, dans lequel les unités répétitives issues de la polymérisation de monomères styréniques répondent à la formule générale (I) suivante :

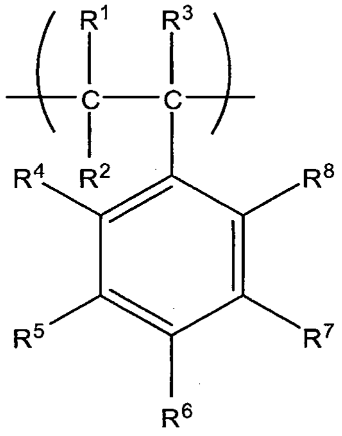

(I)

dans laquelle les $R^1$, $R^2$, $R^3$ représentent, indépendamment l'un de l'autre, un atome d'hydrogène, un groupe alkyle, un atome d'halogène et les $R^4$, $R^5$, $R^6$, $R^7$ et $R^8$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène, un groupe $-SO_3R$, R étant tel que défini à la revendication 1, lesdits groupes alkyles, aryles, alkylaryles, -O-aryle, -O-alkyles étant éventuellement perfluorés et l'un au moins des groupes $R^4$, $R^5$, $R^6$, $R^7$ ou $R^8$ étant un groupe $-SO_3R$, avec R étant tel que défini à la revendication 1.

**3.** Polymère selon l'une quelconque des revendications précédentes, comprenant une chaîne du premier type comprenant deux blocs, lesdits blocs comprenant des unités répétitives de formule (I) telle que définie à la revendication 2, lesdits blocs étant séparés par un groupe espaceur perfluorocarboné répondant à la formule (II) suivante :

$$-(CF_2)_n- \qquad (II)$$

dans laquelle n est un entier allant de 1 à 30.

**4.** Polymère selon l'une quelconque des revendications précédentes, qui est un polymère linéaire.

**5.** Polymère selon l'une quelconque des revendications 1 à 3, qui est un polymère réticulé.

**6.** Polymère selon la revendication 5, comprenant, outre une ou plusieurs chaînes du premier type tel que défini aux revendications précédentes, une ou plusieurs chaînes polymériques d'un deuxième type différent du premier type susmentionné, lesdites chaînes étant liées entre elles par des motifs de réticulation.

**7.** Polymère selon la revendication 6, dans lequel les motifs de réticulation sont des motifs azido de formule $N_3$.

**8.** Polymère selon la revendication 6, dans lequel la ou les chaînes du deuxième type comprennent au moins deux blocs, identiques ou différents, comprenant des unités répétitives issues de la polymérisation de monomères aliphatiques éthyléniques, lesdits blocs étant séparés par un groupe espaceur perfluorocarboné.

**9.** Polymère selon la revendication 8, dans lequel les unités répétitives issues de la polymérisation de monomères aliphatiques éthyléniques répondent à la formule (VI) suivante :

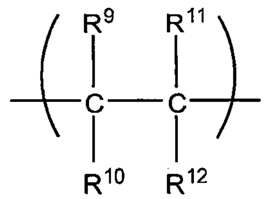

(VI)

dans laquelle les $R^9$, $R^{10}$, $R^{11}$ et $R^{12}$ représentent, indépendamment l'un de l'autre, un atome d'hydrogène, un groupe alkyle, un groupe aryle, un groupe -O-aryle, un groupe -O-alkyle, un groupe acyle, un groupe alkylaryle, un atome d'halogène.

**10.** Polymère selon la revendication 9, dans lequel la chaîne polymérique du deuxième type répond à la formule (VIII) suivante :

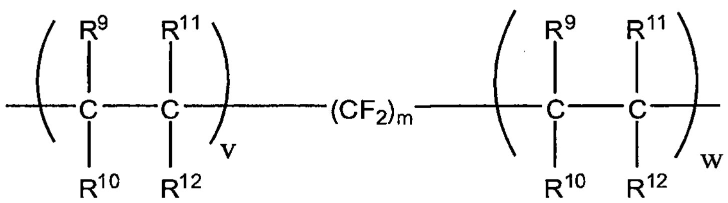

(VIII)

dans laquelle $R^9$ à $R^{12}$ correspondent à un atome d'hydrogène, v et w sont égaux à 1 tandis que m est égal à 6.

**11.** Polymère selon l'une quelconque des revendications 6 à 10, comprenant une ou plusieurs chaînes du premier type comprenant au moins deux blocs constitués d'unités répétitives répondant à la formule (I) telle que définie à la revendication 2, dans laquelle $R^1$ à $R^3$ sont des atomes d'hydrogène et l'un des groupes $R^4$ à $R^8$ est un groupe $-SO_3H$ tandis que les autres groupes sont des atomes d'hydrogène, lesdits blocs étant séparés par un groupe espaceur perfluorocarboné de formule (II) telle que définie à la revendication 3, avec n étant égal à 6, et comprenant une ou plusieurs chaînes du deuxième type comprenant au moins deux blocs constitués d'unités répétitives de formule (VI) telle que définie à la revendication 9, dans laquelle $R^9$ à $R^{12}$ représentent des atomes d'hydrogène, lesdites blocs étant séparés par un groupe espaceur de formule $-(CF_2)_m-$ avec m étant égal à 6, lesdites chaînes étant liées entre elles par des motifs de réticulation du type azido.

**12.** Procédé de préparation d'un polymère comprenant au moins une chaîne polymérique d'un premier type comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$, R pouvant être un atome d'hydrogène, un groupe alkyle ou un contre-ion cationique, lesdits deux blocs étant séparés par un groupe espaceur, lequel groupe espaceur étant un groupe perfluorocarboné, ledit procédé comprenant les étapes suivantes :

a) une étape de polymérisation d'au moins un monomère styrénique par transfert dégénératif d'iode comprenant la mise en contact d'un agent de transfert comprenant un groupe perfluorocarboné tel que mentionné ci-dessus comprenant à ses deux extrémités un atome d' iode, d'un amorceur de polymérisation et d'au moins un monomère styrénique, moyennant quoi l'on obtient un polymère comprenant deux blocs comprenant des unités répétitives issues de la polymérisation du ou desdits monomères styréniques, lesdits blocs étant séparés par un groupe espaceur perfluorocarboné correspondant au groupe perfluorocarboné de l'agent de transfert susmentionné, ledit polymère comprenant à ses extrémités un atome d'iode ;
b) une éventuelle étape de substitution des atomes d'iode situés aux extrémités du polymère obtenu à l'issue de l'étape a) par des groupes azido $-N_3$ ; et
c) une éventuelle étape de sulfonation du polymère obtenu à l'étape a) ou b) dans le cas où le monomère styrénique est dépourvu de groupe $-SO_3R$, R étant tel que défini ci-dessus.

**13.** Procédé de préparation d'un polymère comprenant, outre une ou plusieurs chaînes polymériques du premier type tel que défini à la revendication 12, une ou plusieurs chaînes d' un deuxième type comprenant au moins deux blocs, identiques ou différents, lesdits blocs comprenant des unités répétitives issues de la polymérisation de monomères aliphatiques éthyléniques séparés par un groupe espaceur perfluorocarboné, lesdites chaînes étant liées entre elles par des motifs de réticulation du type azido, ledit procédé de préparation comprenant les étapes suivantes :

d) une étape de préparation d'un polymère téléchélique précurseur desdites chaînes du deuxième type, ledit polymère téléchélique comprenant au moins deux blocs, identiques ou différents, lesdits blocs comprenant des unités répétitives issues de la polymérisation de monomères aliphatiques éthyléniques tels que mentionnés ci-dessus, ces blocs étant séparés par un groupe espaceur perfluorocarboné, les extrémités de ce polymère téléchélique consistant en un groupe azido ;
e) une étape de préparation d'un polymère comprenant au moins une chaîne polymérique d'un premier type comprenant au moins deux blocs, identiques ou différents, lesdits blocs comprenant des unités répétitives issues de la polymérisation de monomères styréniques, lesdites unités comprenant au moins un groupe pendant phényle porteur d'au moins un groupe $-SO_3R$, R pouvant être un atome d'hydrogène, un groupe alkyle ou un contre-ion cationique, lesdits deux blocs étant séparés par un groupe espaceur, lequel groupe espaceur étant un groupe perfluorocarboné, ladite étape de préparation comprenant les opérations successives suivantes :

*une opération de polymérisation d'au moins un monomère styrénique par transfert dégénératif d'iode comprenant la mise en contact d'un agent de transfert comprenant un groupe perfluorocarboné tel que mentionné ci-dessus comprenant à ses deux extrémités un atome d'iode, d'un amorceur de polymérisation et d'au moins un monomère styrénique, moyennant quoi l'on obtient un polymère comprenant deux blocs comprenant des unités répétitives issues de la polymérisation du ou desdits monomères styréniques, lesdits blocs étant séparés par un groupe espaceur perfluorocarboné correspondant au groupe perfluorocarboné de l'agent de transfert, ledit polymère comprenant à ses extrémités un atome d'iode ;
*une opération de substitution des atomes d'iode situés aux extrémités du polymère obtenu à l'opération de polymérisation mentionnée ci-dessus par des groupes azido $-N_3$ ; et

f) une étape de réticulation du polymère obtenu à l'issue de l'étape e) telle que définie ci-dessus en présence du polymère téléchélique obtenu à l'issue de l'étape d) telle que définie ci-dessus ;
g) une éventuelle étape de sulfonation du polymère obtenu à l'étape f) susmentionnée, dans le cas où le ou les monomères styréniques mentionnés à l'étape e) ne comportent pas de groupes $-SO_3R$, avec R étant tel que défini ci-dessus.

**14.** Membrane comprenant un polymère tel que défini selon l'une quelconque des revendications 1 à 11.

**15.** Dispositif de pile comprenant au moins une cellule comprenant une membrane telle que définie à la revendication 14 disposée entre deux électrodes.

## Patentansprüche

**1.** Polymer, umfassend wenigstens eine Polymerkette eines ersten Typs, wobei die Kette wenigstens zwei identische oder unterschiedliche Blöcke umfasst, wobei die Blöcke sich wiederholende Einheiten umfassen, die aus der Polymerisation von Styrolmonomeren hervorgegangen sind, wobei die Einheiten wenigstens eine hängende Phenylgruppe umfassen, die Träger wenigstens einer Gruppe $-SO_3R$ ist, wobei R ein Wasserstoffatom, eine Alkylgruppe oder ein kationisches Gegenion sein kann, wobei die zwei Blöcke durch eine Abstandshaltergruppe separiert sind, welche Abstandshaltergruppe eine Perfluorcarbongruppe ist.

**2.** Polymer nach Anspruch 1, wobei die sich wiederholenden Einheiten, die aus der Polymerisation von Styrolmonomeren hervorgegangen sind, der nachfolgenden allgemeinen Formel (I) entsprechen:

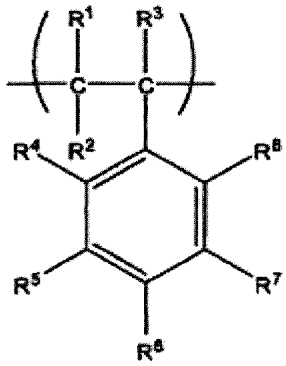

(I)

wobei die $R^1$, $R^2$, $R^3$ unabhängig voneinander ein Wasserstoffatom, eine Alkylgruppe, ein Halogenatom darstellen, und die $R^4$, $R^5$, $R^6$, $R^7$ und $R^8$ unabhängig voneinander ein Wasserstoffatom, eine Alkylgruppe, eine Arylgruppe, eine -O-Arylgruppe, eine -O-Alkylgruppe, eine Acylgruppe, eine Alkylarylgruppe, ein Halogenatom, eine Gruppe $-SO_3R$ darstellen, wobei R wie in Anspruch 1 definiert ist, wobei die Alkyl-, Aryl-, Alkylaryl-, -O-Aryl-, -O-Alkylgruppen eventuell perfluoridiert sind, und wobei wenigstens eine der Gruppen $R^4$, $R^5$, $R^6$, $R^7$ oder $R^8$ eine Gruppe $-SO_3R$ ist, wobei R wie in Anspruch 1 definiert ist.

3. Polymer nach einem der vorhergehenden Ansprüche, umfassend eine Kette vom ersten Typ umfassend zwei Blöcke, wobei die Blöcke sich wiederholende Einheiten der Formel (I) umfassen, wie in Anspruch 2 definiert, wobei die Blöcke durch eine Perfluorcarbon-Abstandshaltergruppe separiert sind, die der nachfolgenden Formel (II) entspricht:

$$-(CF_2)_n- \qquad (II)$$

wobei n eine ganze Zahl von 1 bis 30 ist.

4. Polymer nach einem der vorhergehenden Ansprüche, das ein lineares Polymer ist.

5. Polymer nach einem der Ansprüche 1 bis 3, das ein vernetztes Polymer ist.

6. Polymer nach Anspruch 5, das außer einer oder mehrerer Ketten des ersten Typs, wie in den vorhergehenden Ansprüchen definiert, eine oder mehrere Polymerketten eines vom oben genannten ersten Typ verschiedenen zweiten Typs umfasst, wobei die Ketten durch Vernetzungseinheiten miteinander verbunden sind.

7. Polymer nach Anspruch 6, wobei die Vernetzungseinheiten Azidoeinheiten der Formel $N_3$ sind.

8. Polymer nach Anspruch 6, wobei die Kette(n) des zweiten Typs wenigstens zwei identische oder unterschiedliche Blöcke umfasst/umfassen, umfassend sich wiederholende Einheiten, die aus der Polymerisation von aliphatischen Ethylenmonomeren hervorgegangen sind, wobei die Blöcke durch eine Perfluorcarbon-Abstandshaltergruppe separiert sind.

9. Polymer nach Anspruch 8, wobei die sich wiederholenden Einheiten, die aus der Polymerisation von aliphatischen Ethylenmonomeren hervorgegangen sind, der nachfolgenden Formel (VI) entsprechen:

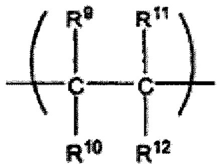

(VI)

wobei die $R^9$, $R^{10}$, $R^{11}$ und $R^{12}$ unabhängig voneinander ein Wasserstoffatom, eine Alkylgruppe, eine Arylgruppe, eine -O-Arylgruppe, eine -O-Alkylgruppe, eine Acylgruppe, eine Alkylarylgruppe, ein Halogenatom darstellen.

**10.** Polymer nach Anspruch 9, wobei die Polymerkette des zweiten Typs

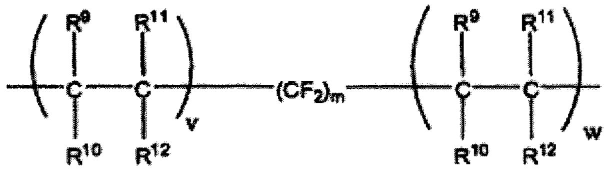

(VIII)

der nachfolgenden Formel (VIII) entspricht:

wobei $R^9$ bis $R^{12}$ einem Wasserstoffatom entsprechen, v und w gleich 1 sind, wohingegen m gleich 6 ist.

**11.** Polymer nach einem der Ansprüche 6 bis 10, umfassend eine oder mehrere Ketten des ersten Typs, umfassend wenigstens zwei Blöcke, die durch sich wiederholende Einheiten gebildet sind, die der Formel (I) entsprechen, wie in Anspruch 2 definiert, wobei $R^1$ bis $R^3$ Wasserstoffatome sind, und wobei eine der Gruppen $R^4$ bis $R^8$ eine Gruppe $-SO_3H$ ist, wohingegen die anderen Gruppen Wasserstoffatome sind, wobei die Blöcke durch eine Perfluorcarbon-Abstandshaltergruppe der Formel (II) separiert sind, wie in Anspruch 3 definiert, mit n gleich 6, und umfassend eine oder mehrere Ketten des zweiten Typs, umfassend wenigstens zwei Blöcke, die durch sich wiederholende Einheiten der Formel (VI) gebildet sind, wie in Anspruch 9 definiert, wobei $R^9$ bis $R^{12}$ Wasserstoffatome darstellen, wobei die Blöcke durch eine Abstandshaltergruppe der Formel $-(CF_2)_m-$ separiert sind, mit m gleich 6, wobei die Ketten durch Vernetzungseinheiten vom Azidotyp miteinander verbunden sind.

**12.** Verfahren zur Herstellung eines Polymers, umfassend wenigstens eine Polymerkette eines ersten Typs, umfassend wenigstens zwei identische oder unterschiedliche Blöcke, wobei die Blöcke sich wiederholende Einheiten umfassen, die aus der Polymerisation von Styrolmonomeren hervorgegangen sind, wobei die Einheiten wenigstens eine hängende Phenylgruppe umfassen, die Träger wenigstens einer Gruppe $-SO_3R$ ist, wobei R ein Wasserstoffatom, eine Alkylgruppe oder ein kationisches Gegenion sein kann, wobei die zwei Blöcke durch eine Abstandshaltergruppe separiert sind, wobei die Abstandshaltergruppe eine Perfluorcarbongruppe ist,
wobei das Verfahren die folgenden Schritte umfasst:

a) Einen Schritt der Polymerisation wenigstens eines Styrolmonomers durch degenerativen Transfer von Iod, umfassend das in Kontakt bringen eines Transferagens, umfassend eine Perfluorcarbongruppe wie oben erwähnt, umfassend an ihren zwei Enden ein Iodatom, eines Polymerisationsstarters und wenigstens eines Styrolmonomers, wodurch man ein Polymer erhält, das zwei Blöcke umfasst, umfassend sich wiederholende Einheiten, die aus der Polymerisation des oder der Styrolmonomers/Styrolmonomere hervorgegangen ist/sind, wobei die Blöcke durch eine Perfluorcarbon-Abstandshaltergruppe separiert sind, die der Perfluorcarbongruppe des oben erwähnten Transferagens entspricht, wobei das Polymer an seinen Enden ein Iodatom umfasst;
b) Einen eventuellen Schritt der Substitution der Iodatome, die an den Enden des am Ende von Schritt a) erhaltenen Polymers gelegen sind, durch Azidogruppen $-N_3$; und
c) Einen eventuellen Schritt der Sulfonierung des im Schritt a) oder b) erhaltenen Polymers in dem Fall, wo das Styrolmonomer keine Gruppe $-SO_3R$ aufweist, wobei R wie oben definiert ist.

**13.** Verfahren zur Herstellung eines Polymers, das außer einer oder mehrerer Polymerketten des ersten Typs, wie in Anspruch 12 definiert, eine oder mehrere Ketten eines zweiten Typs umfasst, umfassend wenigstens zwei identische oder unterschiedliche Blöcke, wobei die Blöcke sich wiederholende Einheiten umfassen, die aus der Polymerisation von aliphatischen Ethylenmonomeren hervorgegangen sind, die durch eine Perfluorcarbon-Abstandshaltergruppe separiert sind, wobei die Ketten durch Vernetzungseinheiten vom Azidotyp miteinander verbunden sind, wobei das Herstellungsverfahren die folgenden Schritte umfasst:

d) Einen Schritt der Herstellung eines telechelischen Vorläuferpolymers der Ketten des zweiten Typs, wobei das telechelische Polymer wenigstens zwei identische oder unterschiedliche Blöcke umfasst, wobei die Blöcke sich wiederholende Einheiten umfassen, die aus der Polymerisation von aliphatischen Ethylenmonomeren wie

oben erwähnt hervorgegangen sind, wobei diese Blöcke durch eine Perfluorcarbon-Abstandshaltergruppe separiert sind, wobei die Enden dieses telechelischen Polymers aus einer Azidogruppe bestehen;
e) Einen Schritt der Herstellung eines Polymers, umfassend wenigstens eine Polymerkette eines ersten Typs, umfassend wenigstens zwei identische oder unterschiedliche Blöcke, wobei die Blöcke sich wiederholende Einheiten umfassen, die aus der Polymerisation von Styrolmonomeren hervorgegangen sind, wobei die Einheiten wenigstens eine hängende Phenylgruppe umfassen, die Träger wenigstens einer Gruppe $-SO_3R$ ist, wobei R ein Wasserstoffatom, eine Alkylgruppe oder ein kationisches Gegenion sein kann, wobei die zwei Blöcke durch eine Abstandshaltergruppe separiert sind, wobei die Abstandshaltergruppe eine Perfluorcarbongruppe ist, wobei der Herstellungsschritt die folgenden aufeinanderfolgenden Operationen umfasst:

* Eine Operation der Polymerisation wenigstens eines Styrolmonomers durch degenerativen Transfer von Iod, umfassend das in Kontakt bringen eines Transferagens, umfassend eine Perfluorcarbongruppe wie oben erwähnt, die an ihren zwei Enden ein Iodatom umfasst, eines Polymerisationsstarters und wenigstens eines Styrolmonomers, wodurch man ein Polymer erhält, das zwei Blöcke umfasst, umfassend sich wiederholende Einheiten, die aus der Polymerisation des oder der Styrolmonomers/Styrolmonomere hervorgegangen ist/sind, wobei die Blöcke durch eine Perfluorcarbon-Abstandshaltergruppe separiert sind, die der Perfluorcarbongruppe des Transferagens entspricht, wobei das Polymer an seinen Enden ein Iodatom umfasst;
* eine Operation der Substitution der Iodatome, die an den Enden des Polymers gelegen sind, welches in der oben erwähnten Polymerisationsoperation erhalten wird, durch Azidogruppen $-N_3$; und

f) Einen Schritt der Vernetzung des Polymers, das am Ende des Schritts e) wie oben definiert erhalten wird, in Anwesenheit des telechelischen Polymers, das am Ende des Schritts d) wie oben definiert erhalten wird;
g) Einen eventuellen Schritt der Sulfonierung des Polymers, das im oben genannten Schritt f) erhalten wird, in dem Fall, wo das oder die Styrolmonomer/Styrolmonomere, wie im Schritt e) erwähnt, keine Gruppen $-SO_3R$ umfasst/umfassen, wobei R wie oben definiert ist.

**14.** Membran, umfassend ein Polymer wie in einem der Ansprüche 1 bis 11 definiert.

**15.** Batterievorrichtung, umfassend wenigstens eine Zelle, die eine Membran umfasst, wie in Anspruch 14 definiert, welche zwischen zwei Elektroden angeordnet ist.

## Claims

**1.** A polymer comprising at least one polymeric chain of a first type, said comprising at least two blocks, the same or different, the said blocks comprising repeat units derived from polymerisation of styrene monomers, the said units comprising at least one phenyl pendant group carrying at least one $-SO_3R$ group, R possibly being a hydrogen atom, an alkyl group or cationic counter-ion, the said two blocks being separated by a spacer group, the spacer group being a perfluorocarbon group.

**2.** The polymer according to claim 1, wherein the repeat units derived from the polymerisation of styrene monomers meet the following general formula (I):

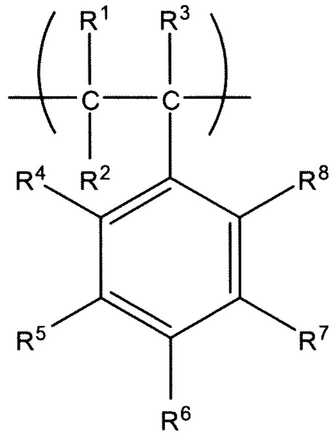

(I)

where $R^1$, $R^2$, $R^3$ independently of each other represent a hydrogen atom, an alkyl group, a halogen atom and $R^4$, $R^5$, $R^6$, $R^7$ and $R^8$ independently of each other represent a hydrogen atom, an alkyl group, an aryl group, a -O-aryl group, a -O-alkyl group, an acyl group, an alkylaryl group, a halogen atom, an $-SO_3R$ group, R being such as defined in claim 1, the said alkyl, aryl, alkylaryl, -O-aryl, -O-alkyl groups optionally being perfluorinated and at least one of groups $R^4$, $R^5$, $R^6$, $R^7$ or $R^8$ being an $-SO_3R$ group, with R being such as defined in claim 1.

**3.** The polymer according to any of the preceding claims, comprising a chain of the first type comprising two blocks, the said blocks comprising repeat units of formula (I) such as defined in claim 2, the said blocks being separated by a perfluorocarbon spacer group meeting the following formula (II):

$$-(CF_2)_n- \qquad (II)$$

where n is an integer ranging from 1 to 30.

**4.** The polymer according to any of the preceding claims which is a straight-chain polymer.

**5.** The polymer according to any of claims 1 to 3, which is a cross-linked polymer.

**6.** The polymer according to claim 5, which, in addition to one or more chains of the first type such as defined in the preceding claims, also comprises one or more polymeric chains of a second type different from the above-mentioned first type, the said chains being linked together via cross-linking repeat units.

**7.** The polymer according to claim 6, wherein the cross-linking repeat units are azido repeat units of formula $N_3$.

**8.** The polymer according to claim 6, wherein the chain(s) of the second type comprise at least two blocks, the same or different, comprising repeat units derived from polymerisation of aliphatic ethylenic monomers, the said blocks being separated by a perfluorocarbon spacer group.

**9.** The polymer according to claim 8, wherein the repeat units derived from the polymerisation of aliphatic ethylenic monomers meet the following formula (VI):

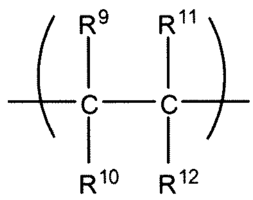

(VI)

where $R^9$, $R^{10}$, $R^{11}$ and $R^{12}$ independently of each other represent a hydrogen atom, an alkyl group, an aryl group, a -O-aryl group, a -O-alkyl group, an acyl group, an alkylaryl group, a halogen atom.

**10.** The polymer according to claim 9, wherein the polymeric chain of the second type meets following formula (VIII):

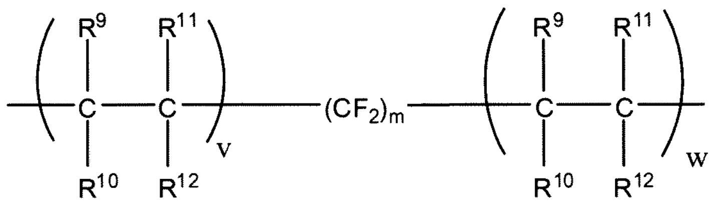

(VIII)

where $R^9$ to $R^{12}$ correspond to a hydrogen atom, v and w equal 1 whilst m equals 6.

**11.** The polymer according to any of claims 6 to 10, comprising one or more chains of the first type containing at least two blocks formed of repeat units meeting formula (I) such as defined in claim 2, in which $R^1$ to $R^3$ are hydrogen atoms and one of groups $R^4$ to $R^8$ is a $-SO_3H$ group whilst the other groups are hydrogen atoms, the said blocks being separated by a perfluorocarbon spacer group of formula (II) such as defined in claim 3, with n equalling 6, and comprising one or more chains of the second type comprising at least two blocks formed of repeat units of formula (VI) such as defined in claim 9, in which $R^9$ to $R^{12}$ represent hydrogen atoms, the said blocks being separated by a spacer group of formula $-(CF_2)_m-$ with m equalling 6, the said chains being linked together by cross-linking repeat units of azido type.

**12.** A method for preparing a polymer comprising at least one polymeric chain of a first type comprising at least two blocks, the same or different, the said blocks comprising repeat units derived from the polymerisation of styrene monomers, the said units comprising at least one phenyl pendant group carrying at least one $-SO_3R$ group, R possibly being a hydrogen atom, an alkyl group or cationic counter-ion, the said two blocks being separated by a spacer group, the said spacer group being a perfluorocarbon group,
the said method comprising the following steps:

a) a polymerisation step of at least one styrene monomer by degenerative transfer of iodine comprising the contacting of a transfer group comprising a perfluorocarbon group such as mentioned above having an iodine atom at its two ends, with a polymerisation initiator and at least one styrene monomer, after which a polymer is obtained comprising two blocks comprising repeat units derived from the polymerisation of the said styrene monomer(s), the said blocks being separated by a perfluorocarbon spacer group corresponding to the perfluorocarbon group of the above-mentioned transfer agent, the said polymer comprising an iodine atom at its ends;
b) an optional substitution step of the iodine atoms positioned at the ends of the polymer obtained after step a) by $-N_3$ azido groups; and
c) an optional sulfonation step of the polymer obtained at step a) or b) if the styrene monomer is devoid of any $-SO_3R$ group, R being such as defined above.

**13.** A method for preparing a polymer which, in addition to one or more polymeric chains of the first type such as defined in claim 12, comprises one or more chains of a second type comprising at least two blocks, the same or different, the said blocks comprising repeat units derived from the polymerisation of aliphatic ethylenic monomers separated by a perfluorocarbon spacer group, the said chains being linked together by cross-linking repeat units of azido type, the said preparation method comprising the following steps:

d) a step to prepare a precursor telechelic polymer of said chains of the second type, the said telechelic polymer comprising at least two blocks, the same or different, the said blocks comprising repeat units derived from the polymerisation of aliphatic ethylenic monomers such as mentioned above, these blocks being separated by a perfluorocarbon spacer group, the ends of this telechelic polymer consisting of an azido group;
e) a step to prepare a polymer comprising at least one polymeric chain of a first type comprising at least two blocks, the same or different, the said blocks comprising repeat units derived from the polymerisation of styrene monomers, the said units comprising at least one phenyl pendant group carrying at least one $-SO_3R$ group, R

possibly being a hydrogen atom, an alkyl group or cationic counter-ion, the said two blocks being separated by a spacer group, the spacer group being a perfluorocarbon group, the said preparation step comprising the following successive operations:

*a polymerisation operation of at least one styrene monomer by degenerative transfer of iodine comprising the contacting of a transfer agent, containing a perfluorocarbon group such as mentioned above having an iodine atom at its two ends, with a polymerisation initiator and at least one styrene monomer, after which a polymer is obtained comprising two blocks comprising repeat units derived from the polymerisation of the said styrene monomer(s), the said blocks being separated by a perfluorocarbon spacer group corresponding to the perfluorocarbon group of the transfer agent, the said polymer comprising an iodine atom at its ends;
*a substitution operation of the iodine atoms positioned at the ends of the polymer obtained at the above-mentioned polymerisation operation, substituted by $-N_3$ azido groups; and

f) a cross-linking step of the polymer obtained after step e) such as defined above in the presence of the telechelic polymer obtained after step d) such as defined above;
g) an optional sulfonation step of the polymer obtained at above-mentioned step f) if the styrene monomer(s) mentioned at step e) do not comprise any $-SO_3R$ groups, with R being such as defined above.

**14.** A membrane comprising a polymer such as defined according to any of claims 1 to 11.

**15.** A fuel cell device comprising at least one cell comprising a membrane such as defined in claim 14 arranged between two electrodes.